(19) **Europäisches Patentamt / European Patent Office / Office européen des brevets**

(11) **EP 3 617 424 A1**

(12) # EUROPEAN PATENT APPLICATION
published in accordance with Art. 153(4) EPC

(43) Date of publication:
**04.03.2020 Bulletin 2020/10**

(21) Application number: **18790996.5**

(22) Date of filing: **23.04.2018**

(51) Int Cl.:
*E04G 23/02* (2006.01)        *B29C 65/48* (2006.01)
*B29C 70/12* (2006.01)        *B29C 70/18* (2006.01)
*B29C 70/44* (2006.01)        *C09J 7/21* (2018.01)
*C09J 201/00* (2006.01)

(86) International application number:
**PCT/JP2018/016473**

(87) International publication number:
**WO 2018/199032 (01.11.2018 Gazette 2018/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2017 JP 2017086066**

(71) Applicants:
- **Toray Industries, Inc.**
  **Tokyo 103-8666 (JP)**
- **Tokyo Metropolitan University**
  **Tokyo 163-0926 (JP)**
- **National University Corporation
  Toyohashi University of Technology
  Toyohashi-shi
  Aichi 441-8580 (JP)**

(72) Inventors:
- **MATSUI Takahiro**
  **Tokyo 103-8666 (JP)**
- **OCHI Yutaka**
  **Nagoya-shi**
  **Aichi 455-8502 (JP)**
- **NAKAMURA Hitoshi**
  **Hachioji-shi**
  **Tokyo 192-0397 (JP)**
- **MATSUMOTO Yukihiro**
  **Toyohashi-shi**
  **Aichi 441-8580 (JP)**

(74) Representative: **Kador & Partner PartG mbB**
**Corneliusstraße 15**
**80469 München (DE)**

(54) **STRUCTURE-FRP MATERIAL BOND CONSTRUCTION AND BONDING METHOD**

(57)     Provided are: a bond construction of an FRP material to a structure characterized in that a bonding layer formed from a fibrous substrate and a resin is interposed between the structure and the FRP material, and the bonding layer is protruded from an edge of the FRP material; and a bonding method. Repair or reinforcement of an existing structure can be made easily and reliably at a construction site with a required FRP material, and in particular, a sufficiently strong bonding force can be exerted between the structure and the FRP material for repair or reinforcement and a targeted repair or reinforcement performance due to the FRP material can be exhibited for the structure more reliably.

FIG. 1

EP 3 617 424 A1

**Description**

Technical Field of the Invention

The present invention relates to a bond construction and a bonding method of an FRP (fiber reinforced plastic) material to a structure, and specifically, to a bond construction and a bonding method of an FRP material to a structure in which, with respect to an existing structure requiring application change or an existing structure having a sectional deficiency caused by corrosion or the like, it is possible to repair or reinforce by a required FRP material easily and reliably even at a construction site without carrying out joining by bolts or welding, thereby securely enhancing or recovering a desired performance of the existing structure.

Background Art of the Invention

In case where the performance of an existing structure (for example, a structure whose surface material is a steel or an FRP) is to be improved along with its application change, joining by bolts or welding is used for joining a structural member such as a steel backing plate to be added and the existing structure. In these methods, however, for example, because a bolt hole becomes a sectional deficiency, and because a residual stress is introduced to the welded joining part, the mother material may bear a burden to cause a new defect. Moreover, in case where the structural member to be added is made of a steel, because the weight increases, not only the force to be considered in the design may increase but also it may cause a problem in workability at construction site.

Further, in case where there is a sectional deficiency in a structure and it is repaired to recover the performance of the structure, for example, in case where a steel structure which has been reduced in thickness by corrosion etc. is repaired, a technology is known wherein reinforcing fiber sheets, in particular, carbon fiber sheets, are used and the performance is recovered by applying carbon fiber sheets corresponding to the rigidity lost by the reduction in thickness.

As such a repairing technology for a structure using a carbon fiber reinforced plastic (CFRP), in addition to a technology of repairing at a construction site by hand-lay-up and a technology of repairing by bonding a CFRP flat plate molded in a factory with a putty-like adhesive, recently, a repair technology by VaRTM (Vacuum assisted RTM, RTM: Resin Transfer Molding) has been proposed. This VaRTM repair technology is a technology wherein dry reinforcing fiber sheets are overlapped at a construction site, they are covered with a film from above, the interior is decompressed with a vacuum pump, and then a resin is injected, whereby an FRP material composed of the reinforcing fiber substrate and the resin and the structure are integrated with each other. In order to ensure the integration and obtain a repair effect, it is important to securely pour the resin up to the bonding surface and harden the resin to exhibit a desired bonding force. However, in the conventional technologies, there is a problem that the resin does not sufficiently flow around, the resin does not sufficiently reach the bonding surface of the FRP material and the structure, and the bonding strength of the adhesive is not sufficiently exhibited.

For example, in Patent document 1, although reinforcement by VaRTM is described, there is no description with respect to a structure for exerting a bonding strength. Therefore, the concept of the substrate layer for bonding does not exist, and there is a fear that it may not be possible to flow the resin up to a necessary part, and secure a stable bonding strength. Further, in case of multilayer-lamination, although the resin impregnation property into the reinforcing layers can be secured by intermediate insertion of a high-permeability fibrous material, the resin does not sufficiently flow up to the bonding surface, and further, there is a fear that the bonding strength may be reduced.

On the other hand, in Patent document 2, a method of reinforcing a concrete structure using a prepreg sheet is disclosed. Because the reinforcing fiber substrate is a resin-impregnated prepreg sheet, although the bonding strength can be ensured, the process time increases, and depending upon the resin, the curing of the resin starts before vacuum suction after sealing, and rather, there is a fear that air may remain on the bonding surface and it may cause reduction of the bonding strength. Moreover, because the member to be added is a prepreg sheet, although the quality is high, since the construction is performed while heating, a heat source facility or the like is required, and there is a problem that the operation procedure becomes complicated.

Prior art documents

Patent documents

Patent document 1: JP-A-10-513515
Patent document 2: JP-A-11-148230

Summary of the Invention

Problems to be solved by the Invention

Accordingly, an object of the present invention is to provide a bond construction and a bonding method of an FRP material to a structure in which, with respect to an existing structure requiring application change or an existing structure having a sectional deficiency caused by corrosion or the like, it is possible to repair or reinforce by a required FRP material easily and reliably at a construction site without carrying out joining by bolts or welding, thereby securely enhancing or recovering a desired performance of the existing structure. In particular, it is an object of the present invention to exert a sufficiently high bonding force between the structure to be repaired or reinforced and the FRP material as a reinforcing material and to make the structure to reliably exhibit repair or reinforcement performance by the FRP material.

Means for solving the Problems

To achieve the above-described objects, a bond construction of an FRP material to a structure according to the present invention is characterized in that a bonding layer formed from a fibrous substrate and a resin is interposed between the structure and the FRP material, and the bonding layer is protruded from an edge of the FRP material.
In such a bond construction of an FRP material to a structure according to the present invention, in a configuration in which the FRP material as a reinforcing material is bonded to the structure to be repaired or reinforced, the bonding layer for exerting a bonding force of the structure and the FRP material clearly exists between the structure and the FRP material, and the bonding layer is interposed between the structure and the FRP material, and the FRP material is bonded to the structure with a sufficiently high bonding force. This bonding layer is formed from a fibrous substrate and a resin, and in particular, formed by impregnating the resin into the fibrous substrate for forming the bonding layer, but in order to make the bonding layer exert a sufficiently high bonding force and to suppress the variation of the bonding force to be small, it is necessary to sufficiently impregnate the resin into the fibrous substrate. Although there is also a resin which is impregnated from the side of the reinforcing fiber substrate for forming the FRP material to the fibrous substrate, only by that, it is often difficult to expect sufficient resin impregnation for the fibrous substrate, and in many cases, it cannot be expected to form a bonding layer exerting a sufficiently high bonding force. Therefore, in the present invention, employed is the configuration in which the bonding layer to be formed is protruded from the edge of the FRP material. Namely, the fibrous substrate for forming the bonding layer is protruded from the edge of the reinforcing fiber substrate forming the FRP material. Since it is not necessary to impregnate the resin into this protruding portion of the fibrous substrate through the reinforcing fiber substrate for forming the FRP material, and the resin can be easily impregnated directly into the protruding portion appearing outside, through the protruding portion, the resin to be impregnated is flowed in the fibrous substrate so as to flow around, and it becomes possible to impregnate the resin sufficiently well throughout the fibrous substrate (that is, sufficiently well at a state where remaining pores are minimized). In particular, if a substrate having a high resin impregnation property is used as the fibrous substrate, it becomes possible to more easily impregnate the resin sufficiently well over the entire fibrous substrate. The bonding layer formed at the state where the resin is impregnated sufficiently over the entire fibrous substrate and the remaining pores are minimized can exhibit a sufficiently high bonding force, and it also becomes possible to suppress the variation of the desired high bonding force to be small, and via this bonding layer, the FRP material is bonded to the structure with a sufficiently high bonding force. In other words, the bond construction of the FRP material to the structure with such a desirable sufficiently high bonding force is achieved by the interposing configuration of the bonding layer between the structure and the FRP material and the protruding structure of the bonding layer from the edge of the FRP material, as the structure after bonding. By the way, in case where there is no protruding portion of the bonding layer as described above, for example, in case where the bonding layer's presence area and the FRP material's presence area are almost the same size, because resin impregnation into the fibrous substrate through the protruding portion as described above cannot be expected, it is difficult to form a bonding layer capable of exhibiting a sufficiently high bonding force.
In the above-described bond construction of an FRP material to a structure according to the present invention, it is preferred that the protrusion length of the bonding layer from the edge of the FRP material is 5 mm or more and 50 mm or less. In other words, the linear distance from the edge of the reinforcing fiber substrate to the edge of the fibrous substrate protruding from above-described the edge is the protrusion length. In case where the distance between both edges is not constant from such a reason that the line of the edge of the fibrous substrate is not parallel to the line of the edge of the reinforcing fiber substrate, the maximum distance between both edges is employed. Further, since this protruding portion, in particular, the protruding portion of the fibrous substrate for forming the bonding layer from the edge of the reinforcing fiber substrate for forming the FRP material becomes an entrance of the resin to be impregnated toward the entire fibrous substrate, if the protrusion length is too small, good and quick resin impregnation cannot be expected. From the viewpoint of good and quick resin impregnation, it may be a large protrusion length, but if the protrusion length is too large, a bonding layer part which substantially does not have the repair or reinforcement function of the structure becomes unnecessarily large, and the material is wastefully used and the appearance of the structure is impaired. Therefore, the protrusion length is preferably suppressed to bare minimum necessary and in view of the above-described reason, it is more preferable to be 10 mm or more and 30 mm or less.

Further, although the bond construction of an FRP material to a structure according to the present invention can be particularly suitably applied to a case where the surface of the structure onto which the bonding layer is installed comprises a steel, it can also be applied to a case where the surface of the structure onto which the bonding layer is installed comprises an FRP. Furthermore, as other cases, it is also applicable to a case where the surface of the structure onto which the bonding layer is installed comprises a material capable of exerting a sufficiently high bonding force of the bonding layer.

The above-described fibrous substrate used for the bonding layer is not particularly limited, and for example, it is preferred that it is made in a form of at least one of a mat-like form in which continuous fibers are randomly oriented, a mesh sheet-like form having pores, and a mat-like form composed of short cut fibers. If such a form, it is possible to desire good and quick resin impregnation from the aforementioned protruding portion to the entire fibrous substrate, even in a relatively thin fibrous substrate.

Although the fiber volume content of the above-described bonding layer is not particularly limited, if it is too low, the layer is not be different from a simple resin bonding layer, and the strength of the bonding layer itself becomes too low and the FRP material for repair or reinforcement may easily peel off from the structure, and otherwise, if it is too high, the resin impregnation rate from the protruding portion may be reduced or the resin may not be easily impregnated, and it may become difficult to sufficiently impregnate the resin over the entire fibrous substrate, and it may become difficult to exert a sufficiently high bonding force of the bonding layer. Therefore, the fiber volume content is preferably in a range of 5% to 40%. Since the bonding layer itself is responsible for exerting a high bonding force and does not aim to increase the reinforcement strength, an extremely high fiber volume content is not necessary.

Further, for the fibrous substrate used for the above-described bonding layer, good and quick resin impregnation from the aforementioned protruding portion to the entire fibrous substrate is desired, in order to satisfy this, it is preferred that the fibrous substrate is a substrate into which a resin is impregnated easily at a certain level or more. The ease of resin impregnation into a substrate can be expressed, for example, as a measure of the gas permeability of the substrate. The gas permeability of the substrate is generally considered to be a measure corresponding to the sectional area of pores of the substrate. From this point of view, more concretely, it is preferred that the sectional area of pores per unit width of a single sheet of the fibrous substrate used in the bonding layer is in a range of 0.05 $mm^2/mm$ to 1.0 $mm^2/mm$.

Further, in the bond construction of an FRP material to a structure according to the present invention, it is preferred that the resin of the bonding layer is the same as a matrix resin of the FRP material. If the resins are the same, the affinity between the bonding layer and the FRP material is extremely high, and a problem such as layer delamination between the two layers does not occur.

Further, in the bond construction of an FRP material to a structure according to the present invention, a formation can also be employed wherein a fibrous substrate for intermediate suction extending in an installation section of the FRP material (in particular, extending in the plane direction of the installed FRP material at a middle position in the thickness direction of the FRP material) and protruding from the edge of the FRP material is provided, and the fibrous substrate for intermediate suction is overlapped onto the fibrous substrate forming the bonding layer at a position protruding from the edge of the FRP material. If such a formation is employed, even in case where the reinforcing fiber substrate for forming the FRP material is a substrate relatively thick and difficult to be impregnated with a resin in its thickness direction, it becomes possible to well impregnate the resin into the reinforcing fiber substrate for forming the FRP material through the fibrous substrate for intermediate suction. Therefore, this fibrous substrate for intermediate suction is desirably a substrate to which the resin is easily impregnated, and preferably a substrate high in the aforementioned gas permeability.

The present invention also provides a bonding method of an FRP material to a structure comprising:

a step of surface treating a bonding surface of the structure;
a step of disposing a fibrous substrate forming a bonding layer and a reinforcing fiber substrate forming the FRP material in this order on the bonding surface of the structure so that the fibrous substrate is protruded from an edge of the reinforcing fiber substrate, and temporarily fixing both substrates;
a step of sealing the fibrous substrate and the reinforcing fiber substrate, and decompressing a sealed interior;
a step of injecting a resin into the decompressed sealed interior; and
a step of hardening and curing the injected resin.

In the above-described bonding method of an FRP material to a structure according to the present invention, the bonding surface of the structure preferably comprises a steel, but also in case where the bonding surface of the structure comprises an FRP, the present invention can be applied. Furthermore, also for other cases, the present invention is applicable in case where the bonding surface of the structure is made of a material that can be sealed and can exert a sufficiently high bonding force of the bonding layer.

Further, in the bonding method of an FRP material to a structure according to the present invention, it can also be performed that the same resin as the injected resin is applied to the bonding surface of the structure before disposing the fibrous substrate. In this way, even in case of a structure in which fine unevenness exists on the bonding surface, the bonding surface can be formed as a flat surface in advance before forming the bonding layer by the resin application, a desirable bonding layer can be easily formed, and the bonding strength of the bonding layer to the bonding surface of the structure can also be secured beforehand to a desired level by the resin application. Furthermore, the uncured resin applied in advance can also be used as one for temporary fixing when installing the fibrous substrate and the reinforcing fiber substrate.

Further, in the bonding method of an FRP material to a structure according to the present invention, it is preferred that the resin is injected simultaneously with respect to the fibrous substrate and the reinforcing fiber substrate. In this way, the additional portion for repair or reinforcement including the FRP material and the bonding layer can be formed more quickly, and the work thereof can be also be facilitated. As the fibrous substrate, it is preferable to use a substrate having excellent resin flowability as much as possible, for example, glass fiber chopped strand mat, glass fiber continuous strand mat, glass fiber mesh sheet, glass fiber surface mat, polypropylene mesh sheet, epoxy resin mesh sheet or the like can be used.

Further, in the bonding method of an FRP material to a structure according to the present invention, it can also be performed that in the above-described disposing step of the reinforcing fiber substrate, a fibrous substrate for intermediate suction is disposed so as to extend in an installation section of the reinforcing fiber substrate, protrude from an edge of the reinforcing fiber substrate and overlap onto the fibrous substrate at a protruding position. It is preferred to use a substrate excellent in resin flowability as much as possible as the fibrous substrate for intermediate suction, for example, glass fiber chopped strand mat, glass fiber continuous strand mat, glass fiber mesh sheet, glass fiber surface mat, polypropylene mesh sheet, epoxy resin mesh sheet, or the like can be used. By disposing such a fibrous substrate for intermediate suction, as aforementioned, even in case where the reinforcing fiber substrate for forming the FRP material is a substrate relatively thick and difficult to be impregnated with a resin in its thickness direction, it becomes possible to well impregnate the resin into the reinforcing fiber substrate for forming the FRP material through the fibrous substrate for intermediate suction.

Furthermore, in the bonding method of an FRP material to a structure according to the present invention, the method can also further comprises a step of disposing a release substrate, which covers the whole of the fibrous substrate and the reinforcing fiber substrate and which can be peeled off after hardening the injected resin, between the temporarily fixing step and the sealing and decompressing step. In this way, as shown in the embodiment described later, after resin impregnation and hardening for forming the FRP material and the bonding layer and curing, a film-like member covering the whole for sealing and decompression and a sheet-like member provided for promoting resin flow, which become unnecessary after formation of the FRP material and the bonding layer, can be easily removed together with the release substrate, and it becomes possible to improve the efficiency of the whole operation.

Effect according to the Invention

Thus, according to the bond construction and the bonding method of an FRP material to a structure according to the present invention, repair or reinforcement of an existing structure can be made easily and reliably at a construction site with a required FRP material, and in particular, it becomes possible that a sufficiently high bonding force is exerted between the structure and the FRP material for repair or reinforcement and a targeted repair or reinforcement performance due to the FRP material is exhibited for the structure more reliably. Furthermore, the protruding portion of the bonding layer can contribute to stress relaxation generated at an end portion, and it becomes possible to make it difficult to be peeled off even with respect to repeatedly generated forces.

Brief explanation of the drawings

[Fig. 1] Fig. 1 is a schematic diagram showing the bond construction and bonding method of an FRP material to a structure according to an embodiment of the present invention.
[Fig. 2] Fig. 2 is a schematic diagram showing the bond construction and bonding method of an FRP material to a structure according to another embodiment of the present invention.

Embodiments for carrying out the Invention

Hereinafter, embodiments of the present invention will be explained referring to figures.

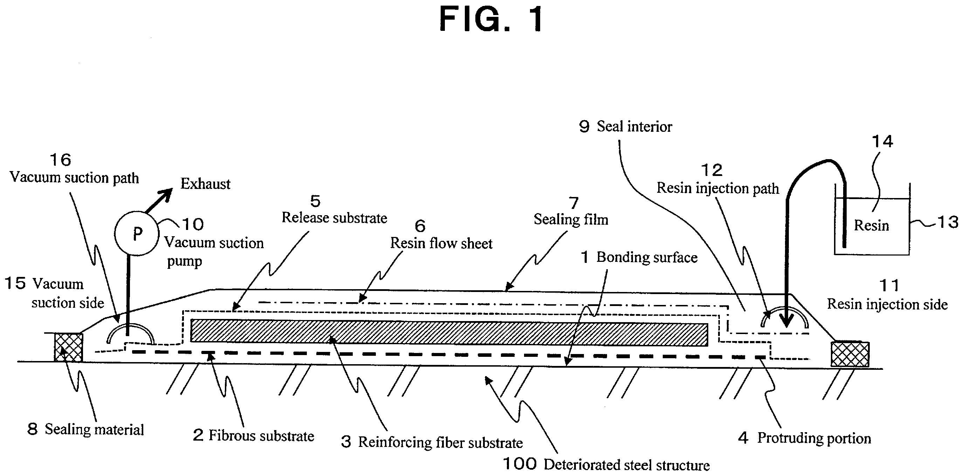

Fig. 1 shows a bond construction and a bonding method of an FRP material to a structure according to an embodiment of the present invention, and in particular, shows a state at the time of construction. In Fig. 1, symbol 100 represents a structure, in particular, a deteriorated steel structure, on the targeted surface of this steel structure 100 as a target for repair or reinforcement, an FRP material for repair or reinforcement is bonded. Fig. 1 shows a state where a reinforcing fiber substrate is disposed before an FRP material comprising the reinforcing fiber substrate and a matrix resin is formed (before the matrix resin is impregnated and hardened).

In the construction for repair or reinforcement shown in Fig. 1, first, a surface treatment, that removes dust or eliminates unnecessary unevenness with respect to the surface of the steel structure 100 (bonding surface 1) to be subjected to repair or reinforcement, is performed. This surface treatment is not particularly limited as long as the formation of the bonding layer in the present invention is smoothly carried out, and an ordinary cleaning for removing oil and rust, and as the case may be, surface polishing with a sandpaper or the like may be performed.

On the bonding surface 1 of the surface-treated steel structure 100, a layer of fibrous substrate 2 for forming a bonding layer and a layer of reinforcing fiber substrate 3 for forming an FRP material are laminated in this order, and after the fibrous substrate 2 is disposed so as to protrude from the edge of the reinforcing fiber substrate 3, both substrates 2 and 3 are temporarily fixed. The protrusion length of the fibrous substrate 2 is set to, for example, 5 mm or more, preferably 10 mm or more. As the form of the protruding portion 4 of the fibrous substrate 2 from the edge of the reinforcing fiber substrate 3, any of a form protruding from at least one edge of the reinforcing fiber substrate 3, preferably from the edges on both sides, and a form protruding from the substantially entire surrounding edge of the reinforcing fiber substrate 3, may be employed.

As aforementioned, the form of the fibrous substrate 2 is formed, for example, in a form of at least one of a mat-like form in which continuous fibers are randomly oriented, a mesh sheet-like form having pores, and a mat-like form composed of short cut fibers. Although the kind of fibers used for the fibrous substrate 2 is not particularly limited, for example, one equivalent to the kind of fibers used for the reinforcing fiber substrate 3 for forming the FRP material, for example, carbon fibers, glass fibers, aramid fibers, phenol fibers, combinations thereof, and the like can be exemplified, and furthermore, since the bonding layer is a layer responsible for load transfer, other organic fibers or inorganic fibers can also be used. Similarly, since the bonding layer is a layer responsible for load transfer, the layer thickness of the bonding layer after formation or the fibrous substrate 2 may not be so large, for example, as the bulk thickness before resin impregnation, the thickness may be about 0.05 to 0.70 mm. The fiber volume content of this fibrous substrate 2 with respect to the bonding layer formed after resin impregnation and hardening is preferably in the range of 5 to 40% as aforementioned.

Further, although the fibrous substrate 2 is impregnated with the resin mainly from the protruding portion 4 as described later, in order to make this resin impregnation to be performed quickly and reliably, as aforementioned, it is preferred that the sectional area of pores per unit width of a single sheet of the fibrous substrate 2, as an index showing the ease of the resin impregnation, is in a range of 0.05 $mm^2$/mm to 1.0 $mm^2$/mm.

Where, although it is omitted to show in the figure, the same resin as the resin to be injected described later can also be applied to the bonding surface 1 of the steel structure 100 before disposing the fibrous substrate 2 as aforementioned. Further, although the curing state of the resin at the time of moving to the next step is not limited, it can also be used for temporarily fixing the fibrous substrate and the reinforcing fiber substrate.

After the fibrous substrate 2 and the reinforcing fiber substrate 3 are disposed in a predetermined form, the fibrous substrate 2 and the reinforcing fiber substrate 3 are sealed, the pressure in the sealed interior is reduced, and the resin is injected into the decompressed sealed interior. In the embodiment shown in Fig. 1, a release substrate 5, which covers the whole of the fibrous substrate 2 and the reinforcing fiber substrate 3 and which can be peeled off after hardening the injected resin, is disposed between the above-described temporarily fixing step and the above-described sealing and decompressing step. As this release substrate 5, for example, a fluorine-based resin-coated glass fiber cloth, a polyethylene sheet, a polypropylene sheet, etc. can be used. However, in case where a resin flow sheet 6 described later is left on the surface of the FRP material and it is integrated, the release substrate 5 may be disposed on the resin flow sheet 6 and peeling off of a sealing film 7 described later may be caused by peeling off of the release substrate 5 so that the sealing film 7 can be reliably peeled off, or in case where the sealing film 7 can be peeled off even without the release substrate 5, the setting of the release substrate 5 may be omitted.

Further, in the embodiment shown in Fig. 1, a resin flow sheet 6 (also called as a resin distribution sheet) is disposed on the above-described release substrate 5 in order to quickly and evenly distribute the injected resin throughout the necessary region as described later. Because the resin from resin flow sheet 6 is impregnated into the reinforcing fiber substrate 3 and the fibrous substrate 2, a resin permeable substrate is used for the release substrate 5. As this resin flow sheet 6, for example, a nylon mesh sheet, a polyethylene mesh sheet, a polyester mesh sheet, a polypropylene mesh sheet or the like can be used.

After the release substrate 5 and the resin flow sheet 6 are disposed, the whole including the fibrous substrate 2 and the reinforcing fiber substrate 3 is covered with the sealing film 7, and the interior is sealed by the seal by a sealing material 8. As the sealing film 7, for example, a nylon film, a polyethylene film, a polyester film, a silicone sheet or the like can be used. The sealed interior 9 covered with the sealing film 7 is evacuated through a vacuum suction pump 10, and the resin is injected into the decompressed sealed interior 9. In the embodiment shown in Fig. 1, a liquefied resin 14 in a resin pot 13 provided outside is delivered to a resin injection path 12 disposed on the resin injection side 11 by suction due to the reduced pressure, and therefrom the delivered resin 14 is sent mainly toward the reinforcing fiber substrate 3 through the resin flow sheet 6 and impregnated, and it is impregnated mainly from the protruding portion 4 of the fibrous substrate 2 to the entire fibrous substrate 2. In the vacuum suction side 15, a vacuum suction path 16 is disposed, and therefrom, the exhaust from the sealed interior 9 and the vacuum suction for resin injection are performed by evacuation through the vacuum suction pump 10. The resin impregnation into the reinforcing fiber substrate 3 and the resin impregnation into the fibrous substrate 2 are performed substantially simultaneously.

After resin injection and impregnation, the injected resin is hardened and cured. Although the hardening may be carried out at a room temperature, if there is a temperature more suitable for hardening separately, the ambient temperature may be controlled at that temperature. By hardening of the resin, the FRP material (not shown) in the present invention in which the resin is impregnated and hardened in the reinforcing fiber substrate 3 and the bonding layer (not shown) in the present invention in which the resin is impregnated and hardened in the fibrous substrate 2 are formed. In the formed bonding layer, a protruding portion protruding from the edge of the FRP material, which is equivalent to that shown in Fig. 1, is left at a state that it is formed. Before or after completion of this hardening and curing of the resin, the resin flow sheet 6, the sealing film 7, the sealing material 8, the resin injection path 12 and the vacuum suction path 16, which are unnecessary for steel structure 100 performed with repair or reinforcement, are peeled off and removed together the release substrate 5.

Via the bonding layer thus formed, the FRP material is bonded to the steel structure 100 with a stable high bonding force, which makes it possible that a desired repair or reinforcement performance of the steel structure 100 is exerted.

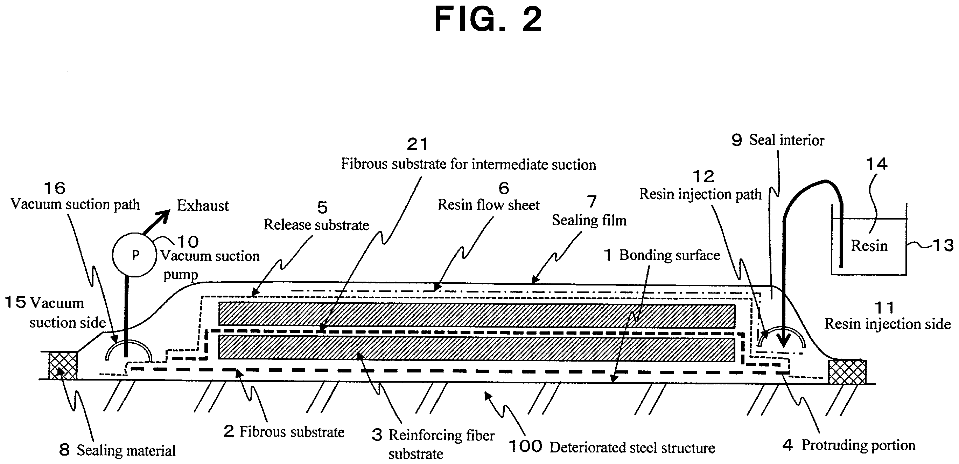

Fig. 2 shows the bond construction and bonding method of an FRP material to a structure according to another embodiment of the present invention, and in particular, shows the state at the time of construction. In Fig. 2, as compared with the embodiment shown in Fig. 1, a fibrous substrate for intermediate suction 21 is provided in the disposition step of the reinforcing fiber substrate 3, this fibrous substrate for intermediate suction 21 is disposed so as to extend in the installation section of the reinforcing fiber substrate 3, protrude from the edge of the reinforcing fiber substrate 3 and overlap on the fibrous substrate 2 (on the protruding portion 4 of the fibrous substrate 2) at its protruding position. With respect to the installation of the fibrous substrate for intermediate suction 21, for example, as shown in the figure, the reinforcing fiber substrate 3 is divided in the thickness direction, and the fibrous substrate for intermediate suction 21 is disposed on the first-layer reinforcing fiber substrate 3, and thereon, the second-layer reinforcing fiber substrate 3 is stacked. Since the configuration is substantially the same as that shown in Fig. 1 other than the installation of the fibrous substrate for intermediate suction 21, the same symbols as those shown in Fig. 1 are referred to the same parts as those shown in Fig. 1, thereby omitting the explanation thereof.

By disposing the above-described fibrous substrate for intermediate suction 21 so as to extend through the installation section of the reinforcing fiber substrate 3 and protrude from the edge of the reinforcing fiber substrate 3, the injected resin flowing in from the protruding portion is quickly flowed through the interior of the fibrous substrate for intermediate suction 21, and can be impregnated into the reinforcing fiber substrate 3. Namely, by the resin impregnation through the fibrous substrate for intermediate suction 21, the resin impregnation to the whole of the reinforcing fiber substrate 3 in the sealed interior 9 can be promoted. Therefore, even in case where the reinforcing fiber substrate 3 for forming the FRP material is a substrate relatively thick and difficult to be impregnated with the resin in the thickness direction, by disposing the above-described fibrous substrate for intermediate suction 21 at a middle position in the thickness direction, it becomes possible to well impregnate the resin into the reinforcing fiber substrate 3 for forming the FRP material. Other operations and effects correspond to those in the embodiment shown in Fig. 1.

Examples

Hereinafter, in order to confirm the effect according to the present invention, the bonding strength of CFRP and steel materials stuck using VaRTM was confirmed in the following procedure.

[Preparation of test specimen]

Using two steel flat plates (elastic modulus: 206 $kN/mm^2$) each having a thickness of 12 mm, a width of 200mm and a length of 250mm, setting them at a state abutted to each other at an unjoined condition, a fibrous substrate for bonding layer was set on the two steel flat plates including the abutted portion, and thereon, 7 layers of unidirectional carbon fiber sheets with different lengths for forming an FRP material in the present invention, Torayca cloth UM 46-40 (supplied by Toray Industries, Inc., carbon fiber amount: $400g/m^2$, elastic modulus: $440 kN/mm^2$), were stacked.

The reinforcing fiber substrate formed by stacked carbon fiber sheets has a fixing length of 100 mm where seven layers are continued, and a taper (length: 60mm) formed by shortening the carbon fiber sheet at intervals of 10 mm toward the end of the carbon fiber sheet.

A release substrate was placed on the above-described fibrous substrate and reinforcing fiber substrate, and thereon, a resin flow sheet was placed. A sealing tape, a tube for suction and a tube for resin injection were disposed around the substrate, and further, a sealing film was covered thereon, and then suctioned with a vacuum pump to evacuate the space covered by the sealing film.

Thereafter, while the vacuum pump was being operated, a two-component room temperature curing-type epoxy resin AUP40 (supplied by Toray ACE Corporation) was injected, and after the resin was impregnated, the vacuum pump was stopped and both tubes were sealed, and the resin was cured until being hardened.

After the resin was hardened and a carbon fiber reinforced plastic CFRP was formed, the test specimen was cut out so as to have a width of 15 mm to prepare a tensile shear bonding test specimen. Using a mechanical testing machine, the shear bonding test specimen was grasped at both ends, and the test specimen was pulled until the CFRP was peeled off.

[Method of measuring sectional area of pores of fibrous substrate for bonding layer]

The substrate thickness (mm) was measured based on JIS R 7602 carbon fiber woven fabric test method. Next, the substrate was cut out at 100 mm $\times$ 100 mm, and the weight per 10,000 $mm^2$ (fiber areal weight) was measured. Next, the density thickness of the substrate was calculated from the density of the material to be used by the following equation. Then, by subtracting the density thickness from the substrate thickness, the sectional area of pores ($mm^2$/mm) per unit width of a single sheet was calculated.

$$\text{Density thickness (mm)} = \text{fiber areal weight (g/m}^2\text{)} \div \text{fiber density (g/cm}^3\text{)}$$

$$\text{Sectional area of pores of single sheet (mm}^2\text{/mm)} = \text{substrate thickness (mm)-density thickness (mm)}$$

[Test results]

The tensile load obtained by the mechanical testing machine was divided by the area calculated by multiplying the test specimen width by the fixing length, and this was taken as the bonding strength.

$$\text{Bonding strength (N/mm}^2\text{)} = \text{tensile load (N) / (test specimen width (mm) x fixing length (mm))}$$

As shown in Table 1, comparison of respective test levels was performed not only using an average AVE., but also, taking into account the standard deviation $\sigma$, using a bonding strength generated with 99.7% probability.

As a result of the comparison, by protruding the fibrous substrate for bonding layer from the reinforcing fiber substrate, the average and the variation were reduced and the bonding strength was increased. Further, in case where a mesh sheet is used for the fibrous substrate or a resin is applied in advance to the bonding layer, the bonding strength can be further improved.

Table 1

| Level | Bonding layer | | | Bonding strength (N/mm$^2$) | | |
|---|---|---|---|---|---|---|
| | Substrate | Sectional area of pores (mm$^2$ /mm) | Specification | AVE. | σ | AVE -3σ |
| 1 | Glass mat | 0.3 | Same length as that of reinforcing fiber substrate | 17.2 | 0.7 | 15.1 |
| 2 | Surface mat | 0.11 | Same length as that of reinforcing fiber substrate | 20.2 | 1.2 | 16.6 |
| 3 | Glass mat | 0.3 | Protruding by 1 cm from each edge of reinforcing fiber substrate | 18.3 | 0.5 | 16.8 |
| 4 | Polypropylene mesh sheet | 0.48 | Protruding by 1 cm from each edge of reinforcing fiber substrate | 22.2 | 0.4 | 21.0 |
| 5 | Glass mat | 0.3 | Protruding by 1 cm from each edge of reinforcing fiber substrate VaRTM repair at condition of resin application beforehand and at state of resin uncured | 19.0 | 0.4 | 17.8 |
| 6 | Glass mat | 0.3 | Protruding by 1 cm from each edge of reinforcing fiber substrate VaRTM repair at condition of resin application beforehand and after resin cured | 18.6 | 0.4 | 17.4 |

Industrial Applicability

The present invention is applicable not only to an infrastructure but also to repair or reinforcement for metallic materials in fields such as aircraft, cars and ships.

Explanation of symbols

1: bonding surface
2: fibrous substrate
3: reinforcing fiber substrate
4: protruding portion
5: release substrate
6: resin flow sheet
7: sealing film
8: sealing material
9: sealed interior
10: vacuum suction pump
11: resin injection side
12: resin injection path
13: resin pot
14: resin
15: vacuum suction side
16: vacuum suction path
21: fibrous substrate for intermediate suction
100: steel structure

**Claims**

1. A bond construction of an FRP material to a structure **characterized in that** a bonding layer formed from a fibrous substrate and a resin is interposed between the structure and the FRP material, and the bonding layer is protruded from an edge of the FRP material.

2. The bond construction of an FRP material to a structure according to claim 1, wherein a protrusion length of the bonding layer from the edge of the FRP material is 5 mm or more and 50 mm or less.

3. The bond construction of an FRP material to a structure according to claim 1 or 2, wherein a surface of the structure onto which the bonding layer is installed comprises a steel.

4. The bond construction of an FRP material to a structure according to claim 1 or 2, wherein a surface of the structure onto which the bonding layer is installed comprises an FRP.

5. The bond construction of an FRP material to a structure according to any of claims 1 to 4, wherein the fibrous substrate used in the bonding layer is made in a form of at least one of a mat-like form in which continuous fibers are randomly oriented, a mesh sheet-like form having pores, and a mat-like form composed of short cut fibers.

6. The bond construction of an FRP material to a structure according to any of claims 1 to 5, wherein a fiber volume content of the bonding layer is in a range of 10% to 40%.

7. The bond construction of an FRP material to a structure according to any of claims 1 to 6, wherein a sectional area of pores per unit width of a single sheet of the fibrous substrate used in the bonding layer is in a range of 0.05 $mm^2/mm$ to 1.0 $mm^2/mm$.

8. The bond construction of an FRP material to a structure according to any of claims 1 to 7, wherein the resin of the bonding layer is the same as a matrix resin of the FRP material.

9. The bond construction of an FRP material to a structure according to any of claims 1 to 8, wherein a fibrous substrate for intermediate suction extending in an installation section of the FRP material and protruding from an edge of the FRP material is provided, and the fibrous substrate for intermediate suction is overlapped onto the fibrous substrate forming the bonding layer at a position protruding from the edge of the FRP material.

10. A bonding method of an FRP material to a structure comprising:

    a step of surface treating a bonding surface of the structure;
    a step of disposing a fibrous substrate forming a bonding layer and a reinforcing fiber substrate forming the FRP material in this order on the bonding surface of the structure so that the fibrous substrate is protruded from an edge of the reinforcing fiber substrate, and temporarily fixing both substrates;
    a step of sealing the fibrous substrate and the reinforcing fiber substrate, and decompressing a sealed interior;
    a step of injecting a resin into the decompressed sealed interior; and
    a step of hardening and curing the injected resin.

11. The bonding method of an FRP material to a structure according to claim 10, wherein the bonding surface of the structure comprises a steel.

12. The bonding method of an FRP material to a structure according to claim 10, wherein the bonding surface of the structure comprises an FRP.

13. The bonding method of an FRP material to a structure according to any of claims 10 to 12, wherein the same resin as the injected resin is applied to the bonding surface of the structure before disposing the fibrous substrate.

14. The bonding method of an FRP material to a structure according to any of claims 10 to 13, wherein the resin is injected simultaneously with respect to the fibrous substrate and the reinforcing fiber substrate.

15. The bonding method of an FRP material to a structure according to any of claims 10 to 14, wherein in the disposing step of the reinforcing fiber substrate, a fibrous substrate for intermediate suction is disposed so as to extend in an installation section of the reinforcing fiber substrate, protrude from an edge of the reinforcing fiber substrate and overlap onto the fibrous substrate at a protruding position.

16. The bonding method of an FRP material to a structure according to any of claims 10 to 15, further comprising a step of disposing a release substrate, which covers the whole of the fibrous substrate and the reinforcing fiber substrate and which can be peeled off after hardening the injected resin, between the temporarily fixing step and the sealing and decompressing step.

# FIG. 1

16 Vacuum suction path

Exhaust

10 Vacuum suction pump

P

5 Release substrate

6 Resin flow sheet

7 Sealing film

9 Seal interior

12 Resin injection path

14

Resin injection path

Resin 13

15 Vacuum suction side

1 Bonding surface

11 Resin injection side

8 Sealing material

2 Fibrous substrate

3 Reinforcing fiber substrate

4 Protruding portion

100 Deteriorated steel structure

EP 3 617 424 A1

# FIG. 2

16 Vacuum suction path    Exhaust

10 Vacuum suction pump

15 Vacuum suction side

5 Release substrate

21 Fibrous substrate for intermediate suction

6 Resin flow sheet

7 Sealing film

1 Bonding surface

9 Seal interior

12 Resin injection path

14

Resin    13

11 Resin injection side

8 Sealing material

2 Fibrous substrate

3 Reinforcing fiber substrate

100 Deteriorated steel structure

4 Protruding portion

EP 3 617 424 A1

## INTERNATIONAL SEARCH REPORT

| International application No. |
| --- |
| PCT/JP2018/016473 |

**A. CLASSIFICATION OF SUBJECT MATTER**

Int.Cl. E04G23/02(2006.01)i, B29C65/48(2006.01)i, B29C70/12(2006.01)i, B29C70/18(2006.01)i, B29C70/44(2006.01)i, C09J7/21(2018.01)i, C09J201/00(2006.01)i

According to International Patent Classification (IPC) or to both national classification and IPC

**B. FIELDS SEARCHED**

Minimum documentation searched (classification system followed by classification symbols)

Int.Cl. E04G23/02, B29C65/48, B29C70/12, B29C70/18, B29C70/44, C09J7/21, C09J201/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2007-332674 A (KAWASAKI HEAVY IND LTD.) 27 December 2007, claims 1-2, 5, paragraphs [0007]-[0009], [0016], fig. 1 (Family: none) | 1-3, 5-8<br>4, 10-14, 16<br>9, 15 |
| Y<br>A | JP 10-513515 A (DEVONPORT ROYAL DOCKYARD LTD.) 22 December 1998, page 5, lines 3-9, page 6, lines 15-19, page 8, line 8 to page 12, line 3, fig. 2 & US 5879778 A, column 1, lines 5-13, column 2, lines 6-16, column 3, line 14 to column 5, line 67, fig. 2 & WO 1996/022432 A1 & EP 827563 A & DE 69601791 T2 & NO 973333 A & NZ 298854 A & AU 4454296 A & AT 177811 T & ES 2131924 T3 & CA 2216631 A1 & DK 827563 T3 & GR 3030285 T | 4, 10-14, 16<br>9, 15 |

☒ Further documents are listed in the continuation of Box C.　　☐ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05.06.2018 | 19.06.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

14

## INTERNATIONAL SEARCH REPORT

International application No.

PCT/JP2018/016473

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2000-213176 A (OKURA, Masatoshi) 02 August 2000, paragraphs [0017], [0021], fig. 2, 3 (Family: none) | 16<br>9, 15 |
| A | US 5972141 A (ELLYLIN, F.) 26 October 1999, column 6, lines 22-38, fig. 6 & CA 2181497 A1 | 9, 15 |

Form PCT/ISA/210 (continuation of second sheet) (January 2015)

**EP 3 617 424 A1**

## REFERENCES CITED IN THE DESCRIPTION

**Patent documents cited in the description**

- JP 10513515 A
- JP 11148230 A